(19) Europäisches Patentamt / European Patent Office / Office européen des brevets

(11) **EP 4 318 664 A1**

(12) **EUROPEAN PATENT APPLICATION**
published in accordance with Art. 153(4) EPC

(43) Date of publication:
**07.02.2024 Bulletin 2024/06**

(21) Application number: **22780114.9**

(22) Date of filing: **16.03.2022**

(51) International Patent Classification (IPC):
**H01M 4/525** (2010.01)        **H01M 4/36** (2006.01)
**H01M 4/505** (2010.01)

(52) Cooperative Patent Classification (CPC):
**H01M 4/36; H01M 4/505; H01M 4/525;** Y02E 60/10

(86) International application number:
**PCT/JP2022/011852**

(87) International publication number:
**WO 2022/209894 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.04.2021 JP 2021062506**

(71) Applicant: **Panasonic Intellectual Property Management Co., Ltd.**
**Osaka-shi, Osaka 540-6207 (JP)**

(72) Inventors:
• FUJITANI Naoya
  Kadoma-shi, Osaka 571-0057 (JP)
• AOKI Yoshinori
  Kadoma-shi, Osaka 571-0057 (JP)
• INOUE Katsuya
  Kadoma-shi, Osaka 571-0057 (JP)
• OGASAWARA Takeshi
  Kadoma-shi, Osaka 571-0057 (JP)

(74) Representative: **Novagraaf International SA**
**Chemin de l'Echo 3**
**1213 Onex, Geneva (CH)**

(54) **POSITIVE ELECTRODE ACTIVE MATERIAL FOR NON-AQUEOUS ELECTROLYTE SECONDARY BATTERIES, AND NON-AQUEOUS ELECTROLYTE SECONDARY BATTERY**

(57)  A positive electrode active material for non-aqueous electrolyte secondary batteries according to an example embodiment of the present invention comprises a lithium transition metal composite oxide having a layered structure and containing not less than 75 mol% of Ni with respect to the total molar quantity of elements excluding Li and O. The lithium transition metal composite oxide is of secondary particles obtained by aggregation of primary particles. A compound represented by the general formula $A_xB_yO_z$ (where $1 \leq x \leq 2$, $1 \leq y \leq 5$, $4 \leq z \leq 9$, A is at least one element selected from among Ca and Sr, and B is at least one element selected from among W, Mo, Ti, Si, Nb, and Zr) is adhered at at least the interface between primary particles inside the secondary particles.

Figure 1

EP 4 318 664 A1

**Description**

TECHNICAL FIELD

The present disclosure relates to a positive electrode active material for a non-aqueous electrolyte secondary battery and a non-aqueous electrolyte secondary battery prepared using this active material.

BACKGROUND

The positive electrode active material included in a positive electrode for a non-aqueous electrolyte secondary battery has attracted much consideration as the positive electrode active material has a significant impact on the performance of the battery, such as capacity or cycle characteristics. For example, Patent Document 1 discloses a positive electrode active material in which an alkaline earth metal and W are present on surfaces of secondary particles of a lithium-transition metal composite oxide containing one or more selected from Mn, Ni, and Co as a transition metal element. Further, Patent Document 2 discloses a positive electrode active material which contains a lithium-transition metal composite oxide containing one or more selected from Mn, Ni, and Co as a transition metal element and in which Ca and W are incorporated as a solid solution.

CITATION LIST

PATENT LITERATURE

Patent Document 1: JP 2018-129221 A
Patent Document 2: WO 2012/035664

SUMMARY

TECHNICAL PROBLEM

Lithium-transition metal composite oxides with high Ni content are known as high-capacity positive electrode active materials but have problems in that, as surface layers of particles have an unstable structure, repeated charging and discharging cause erosion from the surface layers, resulting in material degradation and capacity reduction.

The present disclosure is directed toward retarding capacity reduction caused by charging and discharging and improving cycle characteristics in a non-aqueous electrolyte secondary battery prepared using a positive electrode active material with high Ni content.

SOLUTION TO PROBLEM

According to the present disclosure, there is provided a positive electrode active material for a non-aqueous electrolyte secondary battery, the positive electrode active material comprising a lithium-transition metal composite oxide having a layered structure and containing Ni in an amount of 75 mol% or more relative to the total molar amount of elements excluding Li and O, wherein the lithium-transition metal composite oxide comprises secondary particles that are aggregates of primary particles, and wherein the lithium-transition metal composite oxide has a compound represented by a general formula $A_xB_yO_z$ (where $1 \leq x \leq 2$, $1 \leq y \leq 5$, $4 \leq z \leq 9$, A is at least one selected from Ca and Sr, and B is at least one selected from W, Mo, Ti, Si, Nb, and Zr) adhered to interfaces between the primary particles located at least inside the secondary particles.

According to the present disclosure, there is provided a non-aqueous electrolyte secondary battery comprising a positive electrode containing the above-described positive electrode active material; a negative electrode; and a non-aqueous electrolyte.

ADVANTAGEOUS EFFECTS OF INVENTION

The positive electrode active material according to the present disclosure enables improved cycle characteristics of a non-aqueous electrolyte secondary battery. The non-aqueous electrolyte secondary battery according to the present disclosure has good cycle characteristics with a small reduction in capacity caused by charging and discharging.

BRIEF DESCRIPTION OF DRAWINGS

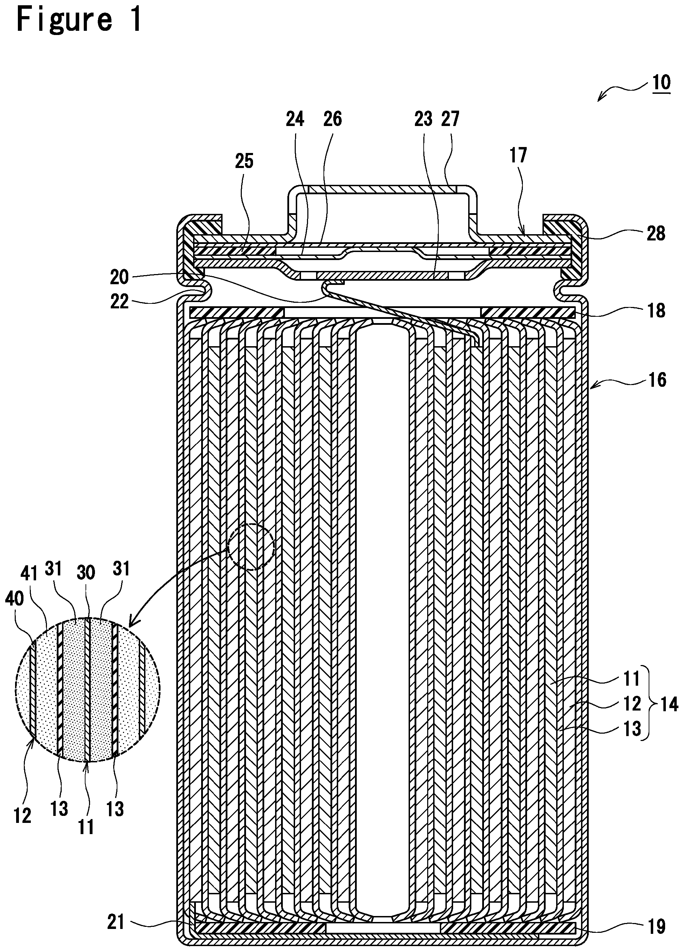

FIG. 1 is a cross section of a non-aqueous electrolyte secondary battery according to an example embodiment.

DESCRIPTION OF EMBODIMENTS

The present inventors have discovered that a high-capacity lithium-transition metal composite oxide with high Ni content can effectively retard reduction in capacity caused by charging and discharging of the battery when the above-described compound $A_xB_yO_z$ is adhered to the interfaces between the primary particles located inside the secondary particles of the composite oxide. Although, as described above, surface layers of particles of lithium-transition metal composite oxides with high Ni content have an unstable structure and are prone to erode, it is believed that having the compound $A_xB_yO_z$ present on the interfaces between the primary particles retards such erosion as the surfaces of the particles are protected effectively.

The compound $A_xB_yO_z$ may be present on the surfaces of the secondary particles, but if, as in Comparative Example 5 described later, the compound $A_xB_yO_z$ is present only on the surfaces of the secondary particles and is absent on the surfaces of the primary particles inside the secondary particles, the advantage of improving cycle characteristics is not achieved. Further, only either of the elements A and B cannot effectively protect the surfaces of the primary particles inside the secondary particles, and the advantage of improving cycle characteristics is not achieved. That is, retarded reduction in capacity caused by charging and discharging and improved cycle characteristics are specifically achieved only when the compound $A_xB_yO_z$ is present on the interfaces between the primary particles located inside the secondary particles.

An example embodiment of a positive electrode active material for a non-aqueous electrolyte secondary battery and a non-aqueous electrolyte secondary battery prepared using this active material according to the present disclosure will be described in detail below with reference to the drawing. It should be noted that selective combination of components of multiple embodiments or modifications described below falls within the scope of the present disclosure.

Although a cylindrical battery including a wound electrode assembly 14 housed in an outer can 16 having a cylindrical shape with a closed bottom is described by way of example below, the outer housing assembly is not limited to cylindrical outer cans but may be, for example, a rectangular outer can (rectangular battery) or a coin-shaped outer can (coin-shaped battery) and may be an outer housing assembly composed of a laminate sheet including a metal layer and a resin layer (laminate battery). The electrode assembly is not limited to those having a wound configuration but may be a laminated electrode assembly including a plurality of positive electrodes and a plurality of negative electrodes alternately laminated with a separator therebetween.

FIG. 1 is a cross section of a non-aqueous electrolyte secondary battery 10 according to an example embodiment. As illustrated in FIG. 1, the non-aqueous electrolyte secondary battery 10 includes the wound electrode assembly 14, a non-aqueous electrolyte, and the outer can 16 that houses the electrode assembly 14 and the non-aqueous electrolyte. The electrode assembly 14 includes a positive electrode 11, a negative electrode 12, and a separator 13, and has a wound configuration in which the positive electrode 11 and the negative electrode 12 are spirally wound with the separator 13 therebetween. The outer can 16 is a metal container having a cylindrical shape with a closed bottom that is open on one side in the axial direction with the opening of the outer can 16 covered with a sealing assembly 17. For ease of description, the following description refers to the side toward the sealing assembly 17 of the battery as "upper" side and the side toward the bottom of the outer can 16 as "lower" side.

The non-aqueous electrolyte includes a non-aqueous solvent and an electrolyte salt dissolved in the non-aqueous solvent. Examples of the non-aqueous solvent include esters, ethers, nitriles, amides, and mixed solvents of two or more thereof. The non-aqueous solvent may contain a halogen-substituted product of these solvents in which hydrogens of the solvents are, at least in part, substituted with a halogen atom such as fluorine. Examples of the non-aqueous solvent include ethylene carbonate (EC), ethyl methyl carbonate (EMC), dimethyl carbonate (DMC), and mixed solvents thereof. For example, a lithium salt such as $LiPF_6$ is used as the electrolyte salt. It should be noted that the non-aqueous electrolyte is not limited to liquid electrolytes but may be a solid electrolyte.

The positive electrode 11, the negative electrode 12, and the separator 13 of the electrode assembly 14 are all long strips of material that are laminated alternately in the radial direction of the electrode assembly 14 as they are spirally wound. To prevent precipitation of lithium, the negative electrode 12 has a size slightly larger than the positive electrode 11. More specifically, the negative electrode 12 has longer lengths than the positive electrode 11 both in the length direction and in the width direction (shorter length direction). Two separators 13, which have a size slightly larger than at least the positive electrode 11, are disposed so that, for example, the positive electrode 11 is interposed between the two separators 13. The electrode assembly 14 includes a positive electrode lead 20 that is connected to the positive electrode 11 by, for example, welding and a negative electrode lead 21 that is connected to the negative electrode 12 by, for example, welding.

Insulating plates 18 and 19 are respectively disposed on upper and lower sides of the electrode assembly 14.

In the example illustrated in FIG. 1, the positive electrode lead 20 passes through a through hole in the insulating plate 18 and extends toward the sealing assembly 17, and the negative electrode lead 21 passes outside the insulating plate 19 and extends toward the bottom of the outer can 16. The positive electrode lead 20 is connected to an underside of an internal terminal plate 23 of the sealing assembly 17 by, for example, welding, and a cap 27 that is the top plate of the sealing assembly 17 electrically connected to the internal terminal plate 23 serves as a positive electrode terminal. The negative electrode lead 21 is connected to an inner surface of the bottom of the outer can 16 by, for example, welding, and the outer can 16 serves as a negative electrode terminal.

A gasket 28 is provided between the outer can 16 and the sealing assembly 17, thereby maintaining airtightness of the space inside the battery. The outer can 16 has a grooved portion 22, which is an inwardly protruding portion of the side surface of the outer can 16, and the grooved portion 22 supports the sealing assembly 17. The grooved portion 22 preferably has an annular shape extending along the circumference of the outer can 16, and supports the sealing assembly 17 on its upper surface. The sealing assembly 17 is fixed to an upper portion of the outer can 16 via the grooved portion 22 and an opening edge portion of the outer can 16 that is swaged to the sealing assembly 17.

The sealing assembly 17 has a configuration in which the internal terminal plate 23, a lower vent member 24, an insulating member 25, an upper vent member 26, and the cap 27 are stacked in that order from the side on which the electrode assembly 14 is located. The components of the sealing assembly 17 have, for example, either a disc shape or a ring shape and are, except for the insulating member 25, electrically connected to each other. The lower vent member 24 and the upper vent member 26 are connected to each other at their center portions, and the insulating member 25 is interposed between their peripheral portions. In response to an increase in internal pressure of the battery due to abnormal heat generation, the lower vent member 24 breaks as it is deformed so as to push the upper vent member 26 toward the cap 27, resulting in an interruption of the electric current path between the lower vent member 24 and the upper vent member 26. In response to a further increase in internal pressure, the upper vent member 26 breaks, letting gas escape through an opening of the cap 27.

The positive electrode 11, the negative electrode 12, and the separator 13 of the electrode assembly 14, especially the positive electrode active material contained in the positive electrode 11, will now be described in detail.

[Positive Electrode]

The positive electrode 11 includes a positive electrode core 30 and a positive electrode mixture layer 31 that is disposed on the surface of the positive electrode core 30. Examples of the positive electrode core 30 include foil of metal that is stable in an electric potential range of the positive electrode 11, such as aluminum or an aluminum alloy, and a film having such metal disposed in its surface layer. The positive electrode mixture layer 31 contains a positive electrode active material, a binder, and a conductive agent, and is preferably disposed on both sides of the positive electrode core 30. The positive electrode 11 can be prepared by, for example, applying positive electrode mixture slurry onto the positive electrode core 30, drying the applied film, and then compressing it to form positive electrode mixture layers 31 on both sides of the positive electrode core 30.

Examples of the binder contained in the positive electrode mixture layer 31 include polytetrafluoroethylene (PTFE), polyvinylidene fluoride (PVdF), and other fluorocarbon resins, polyacrylonitrile (PAN), polyimides, acrylic resins, and polyolefins. One or more of these resins may be used in combination with, for example, a cellulose derivative such as carboxymethylcellulose (CMC) or a salt thereof, or polyethylene oxide (PEO). The content of the binder is, for example, greater than or equal to 0.5% and less than or equal to 2% by mass relative to the mass of the positive electrode mixture layer 31.

Examples of the conductive agent contained in the positive electrode mixture layer 31 include carbon materials such as carbon black, acetylene black, Ketjenblack, graphite, and carbon nanotubes. The content of the conductive agent is, for example, greater than or equal to 0.5% and less than or equal to 10% by mass relative to the mass of the positive electrode mixture layer 31.

The positive electrode active material contains a lithium-transition metal composite oxide containing Ni in an amount of 75 mol% or more relative to the total molar amount of elements excluding Li and O. The lithium-transition metal composite oxide has a layered crystal structure. Specific examples include a layered structure belonging to the space group R-3m or a layered structure belonging to the space group C2/m. The lithium-transition metal composite oxide comprises secondary particles that are aggregates of multiple primary particles. The primary particles have particle sizes of, for example, greater than or equal to 0.05 $\mu$m and less than or equal to 1 $\mu$m. The particle size of a primary particle is measured as the diameter of a circumcircle in the particle image observed using a scanning electron microscope (SEM).

For ease of description, the above-described lithium-transition metal composite oxide is hereinafter referred to as "composite oxide (Z)". The positive electrode active material contains the composite oxide (Z) as the main ingredient. The term main ingredient as used herein represents the ingredient with the highest mass ratio among the ingredients of the positive electrode active material. The positive electrode mixture layer 31 may also contain a composite oxide other than the composite oxide (Z) in combination as the positive electrode active material, but the content of the composite oxide (Z) is preferably 50% or more by mass and may be substantially 100% by mass.

The volume-based median diameter (D50) of the composite oxide (Z) is, for example, greater than or equal to 3 μm and less than or equal to 30 μm, and preferably greater than or equal to 5 μm and less than or equal to 25 μm. As the composite oxide (Z) comprises secondary particles that are aggregates of primary particles, the D50 of the composite oxide (Z) represents the D50 of the secondary particles. The D50 value represents the particle diameter below which 50% of the frequency cumulative total lies in a volume-based particle size distribution. It is also called midpoint particle size. The particle size distribution of the composite oxide (Z) can be measured using a laser diffraction particle size distribution measurement device (for example, MT3000II manufactured by MicrotracBEL Corporation) using water as the dispersion medium.

The composite oxide (Z) preferably has a BET specific surface area of greater than or equal to 0.5 m$^2$/g and less than or equal to 3.5 m$^2$/g. With the BET specific surface area falling within this range, the cycle characteristics can be improved without a reduction in discharge capacity. If the BET specific surface area is less than the above-defined range, as the reaction area is reduced, the discharge capacity may drop. On the other hand, if the BET specific surface area is greater than the above-defined range, as the surfaces cannot be covered sufficiently only by the compound $A_xB_yO_z$, the advantage of improving cycle characteristics decreases. The BET specific surface area is measured according to the JIS R1626 BET method (nitrogen adsorption method).

As described above, the composite oxide (Z) contains Ni in an amount of 75 mol% relative to the total number of moles of elements excluding Li and O. A high energy density battery is obtained when the content of Ni is 75 mol% or more. The maximum Ni content is preferably 95 mol%. If the content of Ni is greater than 95 mol%, as the stability of the layered structure of the composite oxide (Z) is difficult to maintain, the cycle characteristics may decrease. A suitable range of the Ni content is, for example, from 80 to 95 mol% or from 85 to 95 mol%.

Examples of elements that may be contained in the composite oxide (Z), other than Li, O, and Ni, include Co, Mn, Al, Na, K, Mg, Ca, Sr, Ba, Sc, Y, La, Ce, Pr, Nd, Sm, Eu, Gd, Tb, Dy, Ho, Er, Tm, Yb, Lu, Ge, Sn, Pb, Sc, Ti, Si, V, Cr, Fe, Cu, Zn, Ru, Rh, Re, Pd, Ir, Ag, Bi, Sb, B, Ga, In, P, Zr, Hf, Nb, Mo, and W. Among these, an element M, which is at least one selected from Mn, Al, Co, Fe, Ti, Si, Nb, Mo, W, and Zr, is preferably contained. The content of the element M is preferably greater than or equal to 5 mol% and less than or equal to 25 mol% relative to the total molar amount of elements excluding Li and O.

A suitable example of the composite oxide (Z) is a composite oxide represented by a general formula $Li_aNi_bMn_cCo_dAl_eM1_fO_{2-g}$ (where $0.95 < a < 1.05$, $0.75 \leq b \leq 0.95$, $0 \leq c \leq 0.25$, $0 \leq d \leq 0.15$, $0 \leq e \leq 0.1$, $0 \leq f < 0.1$, $0 \leq g \leq 0.05$, $b + c + d + e + f = 1$, and M1 is at least one element excluding Li, Ni, Mn, Co, Al, and O).

The value a that represents the proportion of Li in the composite oxide (Z) more preferably satisfies $0.95 \leq a < 1.05$ and particularly preferably satisfies $0.97 \leq a \leq 1.03$. When a is less than 0.95, the capacity may drop in comparison with cases where a falls within the above-defined range. When a is greater than or equal to 1.05, as the Li compound is added in a greater amount in comparison with cases where a falls within the above-defined range, this may be uneconomic in terms of the manufacturing costs. Additionally, as Co is costly, a reduced content of Co is preferable in consideration of the manufacturing costs.

When the composite oxide (Z) contains Al, the value e that represents the proportion of Al more preferably satisfies $0.02 \leq e \leq 0.07$. As the oxidation number of Al does not change during charging or discharging, it is believed that the structure of the transition metal layer is stabilized when Al is contained in the transition metal layer. On the other hand, an excessively high content of Al leads to a reduction in capacity. For example, Al may be dispersed uniformly in the layered structure of the lithium-transition metal composite oxide or may be present in a portion of the layered structure.

The composite oxide (Z) has a compound represented by a general formula $A_xB_yO_z$ (where $1 \leq x \leq 2$, $1 \leq y \leq 5$, $4 \leq z \leq 9$, A is at least one selected from Ca and Sr, and B is at least one selected from W, Mo, Ti, Si, Nb, and Zr) (hereinafter referred to as "compound $A_xB_yO_z$") adhered to the interfaces between the primary particles located inside the secondary particles of the composite oxide (Z). The compound $A_xB_yO_z$, if present on the surfaces of the primary particles inside the secondary particles of the composite oxide (Z), effectively retards erosion and degradation of the composite oxide (Z), specifically improving the cycle characteristics of the battery.

The presence of the compound $A_xB_yO_z$ can be confirmed by measuring a cross section of secondary particles using TEM-EDX (transmission electron microscopy-energy-dispersive X-ray spectroscopy). For example, the compound $A_xB_yO_z$ may be present in the form of scattered dots on the surfaces of primary particles or may be present in the form of a layer widely covering the surfaces of primary particles.

The compound $A_xB_yO_z$ may be further present on the surfaces of the secondary particles of the composite oxide (Z). In other words, the compound $A_xB_yO_z$ is widely present on the surfaces of the primary particles, located either inside the secondary particles or on the surfaces of the secondary particles. As a secondary particle of the composite oxide (Z) is an aggregate of, for example, five or more primary particles, the surface area of the primary particles inside the secondary particle is greater than that on the surface of the secondary particle. The compound $A_xB_yO_z$ is contained inside the secondary particles in a greater amount than on the surfaces of the secondary particles.

Specific examples of the compound $A_xB_yO_z$ include $CaWO_4$, $CaMoO_3$, $CaMoO_4$, $CaTiO_3$, $Ca_2TiO_4$, $CaSiO_3$, $Ca_2SiO_4$, $CaNbO_3$, $CaNb_2O_6$, $CaZrO_3$, $CaZr_4O_9$, $SrWO_4$, $SrMoO_3$, $SrMoO_4$, $SrTiO_3$, $Sr_2TiO_4$, $SrSiO_3$, $Sr_2SiO_4$, $SrNbO_3$, $SrNb_2O_6$, $SrZrO_3$, and $SrZr_4O_9$.

The content of the element A in the compound $A_xB_yO_z$ is preferably 3 mol% or less relative to the total molar amount of elements excluding Li and O in the composite oxide (Z) and the compound $A_xB_yO_z$. This structure efficiently enables improved cycle characteristics without an increase in resistance or other malfunctions. Similarly, the content of the element B in the compound $A_xB_yO_z$ is preferably 3 mol% or less relative to the total molar amount of elements excluding Li and O in the composite oxide (Z) and the compound $A_xB_yO_z$. The content of the elements A and B in the compound $A_xB_yO_z$ is, for example, 0.1 mol% or more. It should be noted that the elements A and B added to form the compound $A_xB_yO_z$ may be, in part, incorporated as a solid solution in the composite oxide (Z).

An example method of manufacturing the composite oxide (Z) having the compound $A_xB_yO_z$ adhered to the interfaces between the primary particles will be described below.

The manufacturing process of the composite oxide (Z) includes, for example, a first step of obtaining a composite oxide containing, for example, Ni; a second step of mixing the composite oxide and a lithium compound to obtain a mixture; a third step of calcining the mixture; and a fourth step of washing the calcined product with water followed by heating and drying. By adding a compound containing the element A and a compound containing the element B during the manufacturing process of the composite oxide (Z), the compound $A_xB_yO_z$ can be adhered to the interfaces between the primary particles inside the secondary particles of the composite oxide (Z). The compound containing the element B is added in the above-described second step or fourth step. The compound containing the element A may be similarly added in the fourth step, but is preferably added in the second step.

During the first step, while a solution of metal salt containing, for example, Ni and the above-described element M is being stirred, an alkaline solution of, for example, sodium hydroxide is dripped to adjust the pH toward alkaline (for example, greater than or equal to 8.5 and less than or equal to 12.5), thereby causing precipitation (coprecipitation) of a composite hydroxide containing Ni and the element M. By calcining the composite hydroxide, a composite oxide containing Ni and the element M is obtained. The calcination temperature is not particularly limited but is, for example, in a range of from 300 °C to 600 °C.

During the second step, for example, the composite oxide obtained in the first step, the lithium compound, the compound containing the element A, and the compound containing the element B are mixed together. As described above, the compound containing the element B may be added in the fourth step. Examples of the lithium compound include $Li_2CO_3$, LiOH, LiOz, $Li_2O$, $LiNC_h$, $LiNO_2$, $Li_2SO_4$, $LiOH·H_2O$, LiH, and LiF. The composite oxide and the lithium compound are preferably mixed, for example, in a proportion such that the molar ratio of the total amount of Ni and the element M to Li is from 1:0.98 to 1:1.12.

Examples of the compound containing the element A include $Ca(OH)_2$, CaO, $CaCO_3$, $CaSO_4$, $Ca(NO_3)_2$, $Sr(OH)_2$, $Sr(OH)_2·8H_2O$, $Sr(OH)_2·H_2O$, SrO, $SrCO_3$, $SrSO_4$, and $Sr(NO_3)_2$, which may be used after drying and dehydration to reduce the amount of moisture generated during the calcination. These compounds may be, for example, pulverized to have a particle diameter of greater than or equal to 0.1 $\mu$m and less than or equal to 20 $\mu$m. Examples of the compound containing the element B similarly include hydroxides, oxides, carbonates, sulfates, and nitrates of the element B, which may be used after drying and dehydration to reduce the amount of moisture generated during the calcination. These compounds may be, for example, pulverized to have a particle diameter of greater than or equal to 0.1 $\mu$m and less than or equal to 20 $\mu$m.

The composite oxide and the compound containing the element A are preferably mixed, for example, in a proportion such that the molar ratio of the total amount of Ni and the element M to the element A is from 1:0.0005 to 1:0.03. A plurality of compounds containing the element A may be used, and in this case, those compounds are mixed so that the total amount of the element A contained therein satisfies this proportion. A suitable mixture proportion with respect to the composite oxide similarly holds for the compound containing the element B. The elements A and B are preferably mixed in accordance with the stoichiometric proportions of the compound $A_xB_yO_z$ described in paragraph 0036.

The calcination process of the mixture in the third step is, for example, a multi-step calcination process including at least a first calcination step of calcining the mixture in a stream of oxygen at greater than or equal to 450 °C and less than or equal to 680 °C and a second calcination step of calcining the calcined product obtained through the first calcination step in a stream of oxygen at a temperature above 680 °C. In the first calcination step, the temperature is increased to a first set temperature of 680 °C or below at a first temperature increase rate of greater than or equal to 0.2 °C/min and less than or equal to 5.5 °C/min. In the second calcination step, the temperature is increased to a second set temperature of 900 °C or below at a second temperature increase rate of greater than or equal to 0.1 °C/min and less than or equal to 3.5 °C/min, the second temperature increase rate being slower than the first temperature increase rate. It should be noted that the first and second temperature increase rates may be set to a plurality of values for the respective predetermined temperature regions in the above-described ranges.

The holding time of the first set temperature in the first calcination step is preferably 5 hours or less and more preferably 3 hours or less. The holding time of the first set temperature represents a period of time during which the first set temperature is maintained after the first set temperature has been reached, and the holding time may be zero. The holding time of the second set temperature in the second calcination step is preferably greater than or equal to 1 hour and less than or equal to 10 hours and more preferably greater than or equal to 1 hour and less than or equal to 5 hours. The holding time of the second set temperature represents a period of time during which the second set temperature is maintained after the second set temperature has been reached. The calcination of the mixture is performed in a stream of oxygen having, for example, an oxygen concentration of 60% or higher, and the flow rate of the oxygen stream is in a range of greater than or equal to 0.2 mL/min and less than or equal to 4 mL/min per 10 $cm^3$ of the calcination furnace and 0.3 L/min or more per 1 kg of the mixture.

During the fourth step, the calcined product obtained in the third step is washed with water to remove impurities, and the calcined product washed with water is heated and dried. Optionally, the calcined product is, for example, pulverized and classified to adjust the D50 of the positive electrode active material to fall within an intended range. When the compound containing the element B is not added in the above-described second step, the compound containing the element B is added and mixed into, for example, the calcined product washed with water. The calcined product that has been washed with water may be dried at a temperature below 100 °C, but if the compound containing the element B is added in the fourth step, the mixture of the compound containing the element B and the calcined product is preferably heated to a temperature of 100 °C or higher. A suitable example of the temperature range in this case is greater than or equal to 150 °C and less than or equal to 250 °C. The drying may be performed either under vacuum or in the atmosphere. An example of the drying duration is greater than or equal to 1 hour and less than or equal to 5 hours.

It should be noted that, to have the compound $A_xB_yO_z$ adhered to the interfaces between the primary particles located inside the secondary particles of the composite oxide (Z), the compound containing the element A and the compound containing the element B should be added individually. In other words, use of a compound containing both of the elements A and B does not enable presence of the compound $A_xB_yO_z$ on the surfaces of the primary particles inside the secondary particles. As it appears that the compound $A_xB_yO_z$ is produced as the element A is molten to incorporate the element B, the presence of the compound $A_xB_yO_z$ on the surfaces of the primary particles inside the secondary particles is not achieved without at least heat treatment at a temperature of 100 °C or higher in the presence of the compound containing the element A and the compound containing the element B.

[Negative Electrode]

The negative electrode 12 includes a negative electrode core 40 and a negative electrode mixture layer 41 that is provided on a surface of the negative electrode core 40. Examples of the negative electrode core 40 include foil of metal that is stable in an electric potential range of the negative electrode 12, such as copper or a copper alloy, and a film having such metal disposed in its surface layer. The negative electrode mixture layer 41 contains a negative electrode active material and a binder, and is preferably disposed on both sides of the negative electrode core 40. The negative electrode 12 can be prepared by, for example, applying negative electrode mixture slurry containing, for example, a negative electrode active material and a binder, to the surface of the negative electrode core 40, drying the applied film, and then compressing it to form negative electrode mixture layers 41 on both sides of the negative electrode core 40. The negative electrode mixture layer 41 may contain a conductive agent as with the positive electrode 11.

The negative electrode mixture layer 41 contains, as the negative electrode active material, a carbon material that reversibly occludes and releases, for example, lithium ions. A suitable example of the carbon material is graphite including natural graphite such as flake graphite, massive graphite, and earthy graphite, and artificial graphite such as massive artificial graphite (MAG) and graphitized mesophase carbon microbeads (MCMB). An active material containing at least one of an element such as Si or Sn that forms an alloy with Li and a compound that contains such an element may be used as the negative electrode active material. A suitable example of the active material is a silicon material including Si microparticles dispersed in a silicon oxide phase or a silicate phase such as a lithium silicate phase. The negative electrode active material contains a silicon material in combination with a carbon material such as graphite.

As with the positive electrode 11, examples of the binder contained in the negative electrode mixture layer 41 include a fluorocarbon resin, PAN, polyimides, acrylic resins, and polyolefins, and in a preferred embodiment, styrene-butadiene rubber (SBR) is used. The negative electrode mixture layer 41 preferably further contains, for example, CMC or a salt thereof, polyacrylic acid (PAA) or a salt thereof, or polyvinyl alcohol (PVA). Among these, CMC or a salt thereof and PAA or a salt thereof are preferably used in combination with SBR. It should be noted that the negative electrode mixture layer 41 may contain a conductive agent.

[Separator]

A porous sheet having ion permeability and insulating properties is used as the separator 13. Specific examples of the porous sheet include a microporous thin film, woven fabric, and nonwoven fabric. Suitable examples of the material for the separator 13 include polyethylene, polypropylene, polyolefins such as copolymers of ethylene and α-olefins, and cellulose. The separator 13 may have either a single-layer structure or a multilayer structure. The separator 13 may have, on its surface, for example, a heat-resistant layer containing inorganic particles or a heat-resistant layer composed of a high heat resistance resin such as an aramid resin, a polyimide, or a polyamideimide.

EXAMPLES

The present disclosure will be further described below with reference to Examples, but the present disclosure is not limited to these Examples.

<Example 1>

[Synthesis of Positive Electrode Active Material]

A composite hydroxide represented by $[Ni_{0.8}Mn_{0.1}Co_{0.1}](OH)_2$ obtained by a coprecipitation method was calcined at 500 °C for 8 hours to obtain a composite oxide. This composite oxide, lithium hydroxide, calcium hydroxide, molybdenum oxide, and tungsten oxide were mixed so that the molar ratio of Li to the total amount of Ni, Mn, and Co to Ca to Mo to W was 1.05:1.00:0.01:0.01:0.01. This mixture was calcined in a stream of oxygen having an oxygen concentration of 95% (with a flow rate of 2 mL/min per 10 cm$^3$ and 5 L/min per 1 kg of the mixture) with a temperature increase from room temperature to 650 °C at a temperature increase rate of 2.0 °C/min, and was then calcined with a temperature increase to 750 °C at a temperature increase rate of 0.5 °C/min. This calcined product was washed with water to remove impurities and vacuum-dried at 180 °C for 2 hours to obtain a positive electrode active material.
As a result of measurements of the obtained positive electrode active material using an ICP emission spectrometer (iCAP6300 manufactured by Thermo Fisher Scientific), elements listed in Table 1 given below were identified as elements excluding Li, O, and impurity elements. As a result of identification of compounds present in the positive electrode active material by radiation X-ray diffractometry, the presence of $CaMoO_3$ and $CaWO_4$ was confirmed. The presence of Ca, Mo, and W at the interfaces between the primary particles located inside the secondary particles was confirmed using TEM-EDX.

[Preparation of Positive Electrode]

The above-described positive electrode active material, acetylene black, and polyvinylidene fluoride were mixed in a mass ratio of 91:7:2, and N-methyl-2-pyrrolidone (NMP) was used as a dispersion medium to prepare positive electrode mixture slurry. This positive electrode mixture slurry was then applied to a positive electrode core consisting of aluminum foil, the applied film was dried and compressed, and then the positive electrode core was cut into pieces of a predetermined electrode size to obtain a positive electrode having a positive electrode mixture layer on both sides of the positive electrode core. A portion of the positive electrode was an exposed portion where a surface of the positive electrode core was exposed.

[Formulation of Non-Aqueous Electrolyte Solution]

Ethylene carbonate (EC), methylethyl carbonate (MEC), and dimethyl carbonate (DMC) were mixed in a volume ratio of 3:3:4 (25 °C), and $LiPF_6$ was dissolved in the resulting mixed solvent in a concentration of 1.2 mole/liter to prepare a non-aqueous electrolyte solution.

[Preparation of Test Cell]

An aluminum lead was attached to the exposed portion of the above-described positive electrode, a nickel lead was attached to lithium metal foil as a negative electrode, and the positive electrode and the negative electrode were spirally wound with a polyolefin separator therebetween and then pressed in the radial direction to prepare a flat wound electrode assembly. This electrode assembly was placed in an outer housing assembly composed of an aluminum laminate sheet, the inside of the outer housing assembly was filled with the above-described non-aqueous electrolyte solution, and then the opening of the outer housing assembly was sealed to obtain a test cell A1.

<Example 2>

A test cell A2 was prepared in a similar manner to Example 1 except that, during the synthesis of the positive electrode active material, strontium hydroxide and titanium hydroxide were added instead of calcium hydroxide, molybdenum oxide, and tungsten oxide.

<Example 3>

During the synthesis of the positive electrode active material, a composite hydroxide represented by $[Ni_{0.86}Mn_{0.14}](OH)_2$ was used, and a composite oxide obtained by calcining this composite hydroxide, lithium hydroxide, calcium hydroxide, and tungsten oxide were mixed so that the molar ratio of Li to the total amount of Ni and Mn to Ca to W was 1.03:1.00:0.005:0.005. This mixture was calcined in a stream of oxygen having an oxygen concentration of 95% (with a flow rate of 2 mL/min per 10 cm$^3$ and 5 L/min per 1 kg of the mixture) with a temperature increase from room temperature to 650 °C at a temperature increase rate of 3.0 °C/min, and was then calcined with a temperature increase to 780 °C at a temperature increase rate of 1.0 °C/min. A test cell A3 was prepared in a similar manner to Example 1 except that this calcined product was washed with water to remove impurities and vacuum-dried at 200 °C for 2 hours to obtain a positive electrode active material.

<Example 4>

A test cell A4 was prepared in a similar manner to Example 3 except that, during the synthesis of the positive electrode active material, zirconium oxide was added instead of tungsten oxide.

<Example 5>

A test cell A5 was prepared in a similar manner to Example 1 except that, during the synthesis of the positive electrode active material, a composite hydroxide represented by $[Ni_{0.91}Mn_{0.09}](OH)_2$ was used, and a composite oxide obtained by calcining this composite hydroxide, lithium hydroxide, strontium hydroxide, and titanium hydroxide were mixed so that the molar ratio of Li to the total amount of Ni and Mn to Sr to Ti was 1.05:1.00:0.025:0.025.

<Example 6>

A test cell A6 was prepared in a similar manner to Example 5 except that, during the synthesis of the positive electrode active material, calcium hydroxide and molybdenum oxide were added instead of strontium hydroxide and titanium hydroxide.

<Example 7>

A test cell A7 was prepared in a similar manner to Example 5 except that, during the synthesis of the positive electrode active material, calcium hydroxide was added instead of strontium hydroxide.

<Example 8>

A test cell A8 was prepared in a similar manner to Example 5 except that, during the synthesis of the positive electrode active material, calcium hydroxide and tungsten oxide were added instead of strontium hydroxide and titanium hydroxide.

<Example 9>

A composite hydroxide represented by $[Ni_{0.9}Co_{0.05}Al_{0.05}](OH)_2$ obtained by a coprecipitation method was calcined at 500 °C for 8 hours to obtain a composite oxide. This composite oxide, lithium hydroxide, and calcium hydroxide were mixed so that the molar ratio of Li to the total amount of Ni, Co, and Al to Ca was 1.03:1.00:0.005. This mixture was calcined in a stream of oxygen having an oxygen concentration of 95% (with a flow rate of 2 mL/min per 10 cm$^3$ and 5 L/min per 1 kg of the mixture) with a temperature increase from room temperature to 650 °C at a temperature increase rate of 3.0 °C/min, and was then calcined with a temperature increase to 730 °C at a temperature increase rate of 0.5 °C/min. This calcined product was washed with water to remove impurities and, after a predetermined amount of tungsten oxide was added, vacuum-dried at 180 °C for 2 hours to obtain a positive electrode active material. A test cell A9 was prepared in a similar manner to Example 1 except that this positive electrode active material was used for the positive electrode.

<Example 10>

A test cell A10 was prepared in a similar manner to Example 1 except that, during the synthesis of the positive electrode active material, a composite hydroxide represented by $[Ni_{0.93}Mn_{0.07}](OH)_2$ was used, and a composite oxide obtained by calcining this composite hydroxide, lithium hydroxide, strontium hydroxide, and molybdenum oxide were mixed so that the molar ratio of Li to the total amount of Ni and Mn to Sr to Mo was 1.05:1.00:0.005:0.005.

<Example 11>

A test cell A11 was prepared in a similar manner to Example 10 except that, during the synthesis of the positive electrode active material, calcium hydroxide and zirconium oxide were added instead of strontium hydroxide and molybdenum oxide.

<Comparative Example 1>

A test cell B1 was prepared in a similar manner to Example 1 except that, during the synthesis of the positive electrode active material, calcium hydroxide, molybdenum oxide, and tungsten oxide were not added.

<Comparative Example 2>

A test cell B2 was prepared in a similar manner to Example 3 except that, during the synthesis of the positive electrode active material, calcium hydroxide and tungsten oxide were not added.

<Comparative Example 3>

A test cell B3 was prepared in a similar manner to Example 5 except that, during the synthesis of the positive electrode active material, strontium hydroxide and titanium hydroxide were not added.

<Comparative Example 4>

A test cell B4 was prepared in a similar manner to Example 9 except that, during the synthesis of the positive electrode active material, strontium hydroxide and molybdenum oxide were not added.

<Comparative Example 5>

A test cell B5 was prepared in a similar manner to Example 3 except that, during the synthesis of the positive electrode active material, the timing of addition of tungsten oxide was changed to after the calcined product was washed with water, and the drying after the washing with water was performed under the conditions of atmospheric pressure and 80 °C. In the positive electrode active material of Comparative Example 5, $CaWO_4$ was present only on the surfaces of the secondary particles, and $CaWO_4$ was not found at the interfaces between the primary particles located inside the secondary particles.

<Comparative Example 6>

A test cell B6 was prepared in a similar manner to Example 3 except that, during the synthesis of the positive electrode active material, calcium hydroxide was not added.

<Comparative Example 7>

A test cell B7 was prepared in a similar manner to Example 9 except that, during the synthesis of the positive electrode active material, molybdenum oxide was not added.

[Evaluation of Capacity Retention Rate]

A cycle test was performed for the test cells of the Examples and the Comparative Examples. A discharge capacity in the first cycle and a discharge capacity in the 30th cycle in the cycle test were obtained, and a capacity retention rate was calculated by the following equation:

Capacity retention rate (%) = (30th cycle discharge capacity ÷ 1st cycle discharge capacity) x 100.

<Cycle Test>

The test cells A1 to A4, B1, B2, B5, and B6 were charged at a constant current of 0.2 It under a temperature environment of 25 °C until the battery voltage reached 4.4 V, and were charged at a constant voltage of 4.4 V until the current value reached 1/100 It. The test cells were then discharged at a constant current of 0.2 It until the battery voltage reached 2.5 V This charge/discharge cycle was repeated 30 times. The test cells A5 to A9, B3, B4, and B7 were charged at a constant current of 0.2 It until the battery voltage reached 4.3 V, and were charged at a constant voltage of 4.3 V until the current value reached 1/100 It, and other than the above, the cycle test was performed in a similar manner as for the test cells A1 to A4, B1, B2, B5, and B6.

The calculated capacity retention rates are listed in Tables 1 to 4. The capacity retention rates listed in Table 1 are relative values obtained by assuming that the capacity retention rate for the test cell B 1 of Comparative Example 1 is 100. The capacity retention rates listed in Table 2 are relative values obtained by assuming that the capacity retention rate for the test cell B2 of Comparative Example 2 is 100. The capacity retention rates listed in Table 3 are relative values obtained by assuming that the capacity retention rate for the test cell B3 of Comparative Example 3 is 100. The capacity retention rates listed in Table 4 are relative values obtained by assuming that the capacity retention rate for the test cell B4 of Comparative Example 4 is 100.

[Table 1]

| | Positive Electrode Active Material Constituent Element (mol%) | | Compound $A_xB_yO_z$ | Capacity Retention Rate |
|---|---|---|---|---|
| | Ni | Other Ingredients | | |
| A1 | 77.6 | Mn9.7, Co9.7, Ca1, Mo1, W1 | $CaMoO_3$ $CaWO_4$ | 103 |
| A2 | 78.4 | Mn9.8, Co9.8, Sr1, Ti1 | $Sr_2TiO_4$ | 102 |
| B1 | 80 | Mn10, Co10 | - | 100 |

[Table 2]

| | Positive Electrode Active Material Constituent Element (mol%) | | Compound $A_xB_yO_z$ | Capacity Retention Rate |
|---|---|---|---|---|
| | Ni | Other Ingredients | | |
| A3 | 85.1 | Mn13.9, Ca0.5, W0.5 | $CaWO_4$ | 103 |
| A4 | 85.1 | Mn13.9, Ca0.5, Zr0.5 | $CaZrO_3$ | 103 |
| A5 | 86.5 | Mn8.5, Sr2.5, Ti2.5 | $Sr_2TiO_4$ | 102 |
| B2 | 86 | Mn14 | - | 100 |
| B5 | 84.3 | Mn13.7, Ca1, W1 | $CaWO_4$ (Secondary Particle Surface) | 100 |
| B6 | 85.5 | Mn14, W0.5 | - | 100 |

[Table 3]

| | Positive Electrode Active Material Constituent Element (mol%) | | Compound $A_xB_yO_z$ | Capacity Retention Rate |
|---|---|---|---|---|
| | Ni | Other Ingredients | | |
| A6 | 90.8 | Mn9, Ca0.1, Mo0.1 | $CaMoO_3$ | 102 |
| A7 | 87.5 | Mn8.5, Ca2, Ti2 | $Ca_2TiO_4$ | 102 |
| A8 | 90.1 | Mn8.9, Ca0.5, W0.5 | $CaWO_4$ | 104 |
| A9 | 89 | Co5, A15, Ca0.5, W0.5 | $CaWO_4$ | 102 |

(continued)

| | Positive Electrode Active Material Constituent Element (mol%) | | Compound $A_xB_yO_z$ | Capacity Retention Rate |
|---|---|---|---|---|
| | Ni | Other Ingredients | | |
| B3 | 91 | Mn9 | - | 100 |

[Table 4]

| | Positive Electrode Active Material Constituent Element (mol%) | | Compound $A_xB_yO_z$ | Capacity Retention Rate |
|---|---|---|---|---|
| | Ni | Other Ingredients | | |
| A10 | 92 | Mn7, Sr0.5, Mo0.5 | $SrMoO_3$ | 105 |
| A11 | 92 | Mn7, Ca0.5, Zr0.5 | $CaZrO_3$ | 105 |
| B4 | 93 | Mn7 | - | 100 |
| B7 | 90.3 | Mn6.7, Sr3 | - | 97 |

As can be understood from Tables 1 to 4, the test cells of the Examples all have a higher capacity retention rate after the cycle test and better cycle characteristics than the corresponding one of the test cells of the Comparative Examples. The advantage of improving cycle characteristics was not obtained when, during the synthesis of the positive electrode active material, the element A (Ca or Sr) and the element B (W, Mo, Ti, Si, Nb, or Zr) were not added (Comparative Examples 1 to 4), only one of the elements A and B was added (Comparative Examples 6 and 7), or the compound $A_xB_yO_z$ was present only on the surfaces of the secondary particles (Comparative Example 5).

REFERENCE SIGNS LIST

10 non-aqueous electrolyte secondary battery
11 positive electrode
12 negative electrode
13 separator
14 electrode assembly
16 outer can
17 sealing assembly
18, 19 insulating plate
20 positive electrode lead
21 negative electrode lead
22 grooved portion
23 internal terminal plate
24 lower vent member
25 insulating member
26 upper vent member
27 cap
28 gasket
30 positive electrode core
31 positive electrode mixture layer
40 negative electrode core
41 negative electrode mixture layer

**Claims**

1. A positive electrode active material for a non-aqueous electrolyte secondary battery, the positive electrode active material comprising:

   a lithium-transition metal composite oxide having a layered structure and containing Ni in an amount of 75 mol% or more relative to the total molar amount of elements excluding Li and O,
   wherein the lithium-transition metal composite oxide comprises secondary particles that are aggregates of primary particles, and wherein the lithium-transition metal composite oxide has a compound represented by a general formula $A_xB_yO_z$ (where $1 \leq x \leq 2$, $1 \leq y \leq 5$, $4 \leq z \leq 9$, A is at least one selected from Ca and Sr, and B is at least one selected from W, Mo, Ti, Si, Nb, and Zr) adhered to interfaces between the primary particles located at least inside the secondary particles.

2. The positive electrode active material for a non-aqueous electrolyte secondary battery according to claim 1, wherein the content of the element A in the compound is 3 mol% or less relative to the total molar amount of elements excluding Li and O in the lithium-transition metal composite oxide and the compound.

3. The positive electrode active material for a non-aqueous electrolyte secondary battery according to claim 1 or 2,

   wherein the lithium-transition metal composite oxide contains an element M that is at least one selected from Mn, Al, Co, Fe, Ti, Si, Nb, Mo, W, and Zr, and
   wherein the content of the element M is greater than or equal to 5 mol % and less than or equal to 25 mol% relative to the total molar amount of elements excluding Li and O.

4. The positive electrode active material for a non-aqueous electrolyte secondary battery according to any one of claims 1 to 3, wherein the lithium-transition metal composite oxide has a BET specific surface area of greater than or equal to 0.5 m$^2$/g and less than or equal to 3.5 m$^2$/g.

5. A non-aqueous electrolyte secondary battery comprising:

   a positive electrode containing the positive electrode active material according to any one of claims 1 to 4;
   a negative electrode; and
   a non-aqueous electrolyte.

# Figure 1

## INTERNATIONAL SEARCH REPORT

| International application No. |
| --- |
| **PCT/JP2022/011852** |

**A. CLASSIFICATION OF SUBJECT MATTER**

*H01M 4/525*(2010.01)i; *H01M 4/36*(2006.01)i; *H01M 4/505*(2010.01)i
FI:  H01M4/525; H01M4/505; H01M4/36 A

According to International Patent Classification (IPC) or to both national classification and IPC

**B. FIELDS SEARCHED**

Minimum documentation searched (classification system followed by classification symbols)

H01M4/525; H01M4/36; H01M4/505

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2012-252807 A (TOYOTA MOTOR CORP) 20 December 2012 (2012-12-20) | 1-5 |
| A | JP 2006-351378 A (MATSUSHITA ELECTRIC IND CO LTD) 28 December 2006 (2006-12-28) | 1-5 |
| A | CN 110931738 A (GUANGDONG BRUNP RECYCLING TECHNOLOGY CO., LTD.) 27 March 2020 (2020-03-27) | 1-5 |
| A | JP 2020-515010 A (LG CHEMICAL LTD) 21 May 2020 (2020-05-21) | 1-5 |
| A | JP 2017-188428 A (BASF TODA BATTERY MATERIALS LLC) 12 October 2017 (2017-10-12) | 1-5 |
| A | JP 2018-185884 A (PANASONIC IP MAN CORP) 22 November 2018 (2018-11-22) | 1-5 |

☑ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **13 May 2022** | **24 May 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/JP2022/011852** |

**C.    DOCUMENTS CONSIDERED TO BE RELEVANT**

| Category* | Citation of document, with indication, where appropriate, of the relevant passages | Relevant to claim No. |
| --- | --- | --- |
| P, X | WO 2021/241075 A1 (PANASONIC IP MAN CORP) 02 December 2021 (2021-12-02) claims, examples | 1-5 |

Form PCT/ISA/210 (second sheet) (January 2015)

## INTERNATIONAL SEARCH REPORT
### Information on patent family members

International application No.

**PCT/JP2022/011852**

| Patent document cited in search report | | | Publication date (day/month/year) | Patent family member(s) | | | Publication date (day/month/year) |
|---|---|---|---|---|---|---|---|
| JP | 2012-252807 | A | 20 December 2012 | (Family: none) | | | |
| JP | 2006-351378 | A | 28 December 2006 | US | 2009/0081548 | A1 | |
| | | | | WO | 2006/134851 | A1 | |
| | | | | CN | 101199065 | A | |
| | | | | KR | 10-2008-0015034 | A | |
| CN | 110931738 | A | 27 March 2020 | (Family: none) | | | |
| JP | 2020-515010 | A | 21 May 2020 | US | 2020/0161650 | A1 | |
| | | | | WO | 2019/103488 | A1 | |
| | | | | EP | 3595060 | A1 | |
| | | | | KR | 10-2019-0059249 | A | |
| | | | | CN | 110431695 | A | |
| JP | 2017-188428 | A | 12 October 2017 | US | 2019/0115596 | A1 | |
| | | | | WO | 2017/170548 | A1 | |
| | | | | EP | 3439084 | A1 | |
| | | | | CN | 108886144 | A | |
| | | | | KR | 10-2018-0124996 | A | |
| JP | 2018-185884 | A | 22 November 2018 | WO | 2017/056423 | A1 | |
| WO | 2021/241075 | A1 | 02 December 2021 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018129221 A

- WO 2012035664 A